**Europäisches Patentamt**

(19) **European Patent Office**

**Office européen des brevets**

(11) Veröffentlichungsnummer: **0 022 279**
**B1**

(12) **EUROPÄISCHE PATENTSCHRIFT**

(45) Veröffentlichungstag der Patentschrift:
14.03.84

(21) Anmeldenummer: 80200378.0

(22) Anmeldetag: 25.04.80

(51) Int. Cl.³: **G 02 F 1/01** // C23F1/02,
C03C23/00, C09K13/04

(54) Verfahren zur Herstellung eines optisch transparenten und elektrisch leitfähigen Filmmusters.

(30) Priorität: 04.07.79 CH 6229/79

(43) Veröffentlichungstag der Anmeldung:
14.01.81 Patentblatt 81/2

(45) Bekanntmachung des Hinweises auf die Patenterteilung:
14.03.84 Patentblatt 84/11

(84) Benannte Vertragsstaaten:
CH DE GB LI

(56) Entgegenhaltungen:
DE - A - 2 425 702
DE - A - 2 741 440
DE - C - 20 221
GB - A - 1 141 513
US - A - 2 606 566
US - A - 2 987 066

(73) Patentinhaber: BBC Aktiengesellschaft Brown, Boveri & Cie., Haselstrasse, CH-5401 Baden (CH)

(72) Erfinder: Schmidt, Walter, Dr.-Phys.,
Oberwiesenstrasse 73, CH-8050 Zürich (CH)

BUNDESDRUCKEREI BERLIN

## Verfahren zur Herstellung eines optisch transparenten und elektrisch leitfähigen Filmmusters

Die Erfindung betrifft ein Verfahren zur Herstellung eines optisch transparenten und elektrisch leitfähigen Filmmusters gemäß dem Oberbegriff des Anspruchs 1.

Für verschiedene Typen elektrooptischer Anzeigen, z. B. Flüssigkristallanzeigen, werden optisch transparente Bereichselektroden benötigt, um das dielektrische Medium zwischen vorbestimmten, elektrisch ansteuerbaren Teilen der transparenten Bereichselektrode und einer zweiten Elektrodenschicht in entsprechend einander übedeckenden Bereichen zwischen der Bereichselektrode und der zweiten Elektrode örtlich begrenzten Feldern auszusetzen, z. B. um die optischen Eigenschaften einer als Dielektrikum verwendeten Flüssigkristallschicht örtlich zu verändern, so daß eine den angesteuerten Bereichen entsprechende Anzeige durch die transparente Bereichselektrode hindurch sichtbar wird.

Entsprechende Trägerplatten, auch »Substrate« genannt, z. B. Glasplatten mit transparenten Bereichselektrodenschichten oder -filmen werden meist dadurchhergestellt, daß auf eine Oberfläche der Trägerplatte ein zusammenhängender dünner Film aus transparentem und elektrisch leitfähigem Material, z. B. halbleitenden Metalloxiden, wie $In_2O_3$ oder/und $SnO_2$, aufgebracht wird, z. B. durch Aufdampfen oder Aufsputtern im Vakuum und dann bereichsweise durch Ätzen entfernt wird. Die aufgedampften oder aufgesputterten Filme sind in frischem, d. h. nicht getempertem Zustand mit Säuren relativ leicht ätzbar; zur lokal begrenzten Ätzung wird der Film auf der Trägerplatte nach dem Photoresist- oder Photolackverfahren mit einer Schicht aus photopolymerisierbarem Material abgedeckt, die durch bildmäßige Belichtung in den belichteten Bereichen polymerisiert und dann an den unbelichteten Bereichen zur Bildung der Fenster einer Ätzmaske entfernt werden kann. Dann werden die nicht abgedeckten Bereiche des Filmes abgeätzt und danach die Photolackschicht von den abgedeckten, auf der Trägerplatte verbleibenden Bereichen des transparenten Elektrodenfilmes entfernt. Dieses Photoresist-Ätzverfahren gemäß dem Oberbegriff des Anspruchs 1, wie es beispielsweise aus der DE-A-2 741 440 bekannt ist, ermöglicht die Herstellung von sehr komplexen bzw. feinstrichigen Bereichselektroden, ist aber sehr kostspielig bzw. zeitraubend.

Zur Herstellung von solchen transparenten Bereichselektroden ist es weiterhin bekannt, das elektrisch leitfähige Material für den transparenten Elektrodenfilm nur bereichsweise auf die entsprechend abgedeckte Trägerplatte aufzudampfen; zum Abdecken der nicht mit Elektrodenfilm zu versehenden Bereiche der Trägerplatte kann auf diese Weise entweder eine Metallmaske aufgelegt oder ein entsprechendes Abdeckmuster aufgedruckt werden (siehe z. B. DE-

AS 2 322 826). Das Abdecken mit einer Metallmaske ist problematisch, weil der erforderliche enge Kontakt zwischen Maske und Trägerplatte sehr schwierig zu erreichen und die Gefahr einer unscharfen Abdeckung mit entsprechend schlechter Definition des aufgedampften Musters sehr groß ist. Auch das Aufdrucken einer Abdeckmaske vor dem Aufdampfen des Elektrodenfilmes führt zu Problemen, weil die aufgedruckte Abdeckschicht sogenannte Randschatten erzeugt und damit die Definition des Elektrodenmusters beeinträchtigen kann; ferner muß die aufgedruckte Abdeckschicht vor dem Aufdampfen zunächst getrocknet und nach dem Aufdampfen entfernt weden, z. B. durch Abwaschen, Abbrennen oder Abbürsten, was durch die beim Aufdampfen auch auf den abgedeckten Bereichen gebildete Schicht noch erschwert wird.

Ein anderes, ohne Abdeckung arbeitendes Ätzverfahren für dünne Metallschichten, wie sie für die Herstellung von gewickelten Kondensatoren verwendet werden, ist in der US-PS 2 897 066 beschrieben. Darin werden die durch Ätzen zu entfernenden Bereiche der Metallschicht mit einer Ätzmasse bedruckt. Die Ätzmasse wirkt dann auf die bedruckten Bereiche bis zu ihrer Durchätzung ein. Schließlich werden die von dem Ätzmittel aus der Ätzmasse durch Reaktion mit der Metallschicht gebildeten Produkte zusammen mit den nicht verbrauchten Anteilen der aufgedruckten Ätzmasse in einer Waschvorrichtung mittels Wasser entfernt. Während dieses bekannte Verfahren für die vergleichsweise groben Strukturen der metallischen Kondensatorbeläge mit ihrer großen Schichtdicke unkritisch ist, reicht es für die Genauigkeitsanforderungen, die an die Elektroden von elektrooptischen Anzeigevorrichtungen gestellt werden, bei weitem nicht aus. Insbesondere führt auch der Waschprozeß, bei dem die Wirkung des Ätzmittels wegen des Wassers nicht sofort unterbunden wird, zu Schädigungen der dünnen, optisch transparenten Elektodenschicht.

Aufgabe der vorliegenden Erfindung ist daher ein Verfahren zur Herstellung eines optisch transparenten und elektrisch leitfähigen Filmmusters auf einer Trägerplatte, welches bei unverändert hoher Genauigkeit die fertigungstechnischen Nachteile des Photoresistverfahrens vermeidet und die Schwierigkeiten des bekannten Druckätzverfahrens überwindet.

Die Aufgabe wird bei einem Verfahren gemäß Oberbegriff des Anspruchs 1 durch die Merkmale aus dem kennzeichnenden Teil dieses Anspruchs gelöst. Die durch Ätzen zu entfernenden Bereiche der in an sich bekannter Weise auf die meist transparente Trägerschicht vorgängig aufgebrachten Schicht (Elektrodenschicht) aus elektrisch leitfähigem und optisch transparentem Material, meist aus halbleitendem Metalloxyd, wie $In_2O_3$ und/oder $SnO_2$, werden mit einer

Masse bedruckt, z. B. nach dem an sich bekannten Siebdruckverfahren, die ein Ätzmittel für das leitfähige transparente Material bzw. Metalloxid enthält; der so entstandene schichtförmige Belag auf den zu ätzenden Bereichen der transparenten Elektrodenschicht ist vorzugsweise relativ dünn, z. B. 5 bis 50 µm, und enthält das Ätzmittel, meist eine Mineralsäure, wie Phosphorsäure, vorzugsweise in Mischung mit einem Träger. Da die zu ätzende transparente Elektrodenschicht in der Regel vergleichsweise sehr dünn ist, z. B. 0,01 bis 0,05 µm, kann mit einer aufgedruckten Ätzschicht der obengenannten Dicke eine rasche und vollständige Abätzung der zu entfernenden Elektrodenschichtbereiche mit einer Masse (»Druckpaste« bzw. »Druckfarbe«) erhalten werden, die nur einige wenige Prozent Mineralsäure enthält, und zwar bei normalen oder mäßig erhöten Temperaturen und mit einer Ätzdauer von einigen Sekunden oder wenigen Minuten.

Die aufgedruckte Ätzschicht wird dann mit den Ätzungsprodukten der Elektrodenschicht entfernt, was problemlos und einfach durch Abspülen geschehen kann. Vorzugsweise enthält die Masse einen Träger, der (a) für die Elektrodenschicht inert ist, d. h. diese nicht chemisch oder auf andere Weise verändert, (b) mit dem Ätzmittel verträglich (kompatibel) bzw. mischbar ist, (c) in geeigneten Lösungsmitteln, vorzugsweise organischem Lösungsmittel, löslich ist, und (d) der Masse die für das gewählte Druckverfahren geeignete Viskosität bzw. Konsistenz (kein Verlaufen auf dem damit bedruckten Substrat) verleiht.

Die beigeschlossene Zeichnung dient der Erläuterung der Erfindung und dem Vergleich mit dem Stand der Technik. Es zeigt

Fig. 1 eine schematische Darstellung der Stufen des bekannten Photoresist-Ätzverfahrens und

Fig. 2 eine schematische Darstellung der Stufen des erfindungsgemäßen Verfahrens.

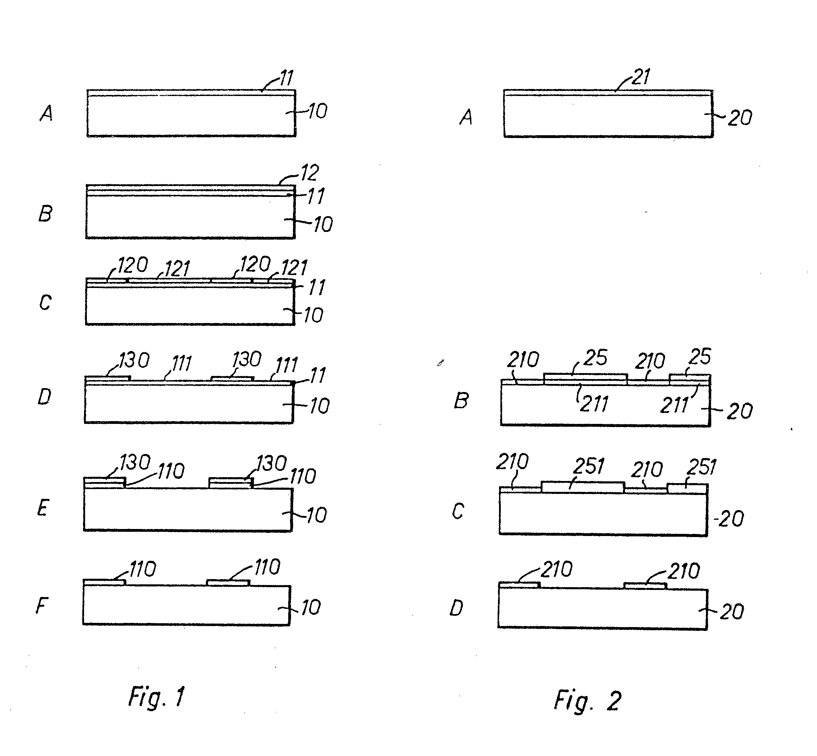

In Fig. 1 zeigt die Stufe A das Substrat bzw. die Trägerschicht 10, z. B. eine 0,2 bis 1,5 mm dicke Glasscheibe, mit einer in üblicher Weise aufgetragenen zusammenhängenden Schicht 11 (Leitschicht) aus transparentem elektrisch leitfähigem Material, z. B. $In_2O_3$, das mit $SnO_2$ dotiert ist. Solche beschichteten Substrate sind kommerziell erhältlich.

Gemäß Stufe B von Fig. 1 wird auf die Leitschicht 11 eine Photolackschicht 12 aufgetragen und getrocknet, d. h. die Stufe B umfaßt mindestens zwei Teilschritte. In Stufe C von z. B. 1 wird die Photolackschicht durch eine (nicht dargestellte) Maske bildmäßig belichtet, so daß belichtete Bereiche 120 und unbelichtete Bereiche 121 der Photolackschicht entstehen. In Stufe D von Fig. 1 ist die durch »Entwickeln« der Photoresistschicht gebildete Ätzmaske 130 auf den nicht zu ätzenden Teilen der Leitschicht 11 dargestellt. Auch der Übergang von Stufe C zu Stufe D gemäß Fig. 1 umfaßt somit meist mehrere Schritte (Härtung der Maskenbereiche 120, Entfernung der Fensterbereiche 121, eventuell Reinigung).

Stufe E von Fig. 1 zeigt die mit der Maske 130 abgedeckten Bereiche 110 der Leitschicht nach dem Abätzen der nicht abgedeckten Leitschichtbereiche (111 von Stufe D).

Stufe F von Fig. 1 zeigt das Substrat 10 mit den Leitschichtbereichen 110 des fertigen Musters nach Entfernen der Ätzmaskenbereiche 130.

Das in Stufe A von Fig. 2 dargestellte Ausgangsmaterial des erfindungsgemäßen Verfahrens entspricht dem Ausgangsmaterial des in Fig. 1 erläuterten bekannten Verfahrens, besteht aus dem Substrat oder der Trägerplatte 20 mit einer darauf aufgebrachten zusammenhängenden Schicht 21 (Leitschicht) und ist wie das Ausgangsmaterial des bekannten Verfahrens gemäß Fig. 1 kommerziell erhältlich.

Die in Fig. 1 erläuterten und zum Teil meist mehrschrittigen Stufen des Auftragens der Ätzmaske aus Photolack (d. h. die Stufen B, C von Fig. 1) entfallen. Statt dessen ist gemäß Stufe B von Fig. 2 erfindungsgemäß auf die Leitschicht 21 des Ausgangsmaterials (Stufe A) eine musterartig aufgedruckte Schicht 25 auf die durch Ätzen zu entfernenden Leitschichtbereiche 211 aufgebracht, während die gewünschten Leitschichtbereiche 210 des herzustellenden Elektrodenmusters freibleiben.

Ohne besondere zusätzliche Maßnahmen, allenfalls durch leichtes Erwärmen (allgemeiner Bereich von 0°C oder weniger bis etwa 100°C, vorzugsweise 30—60°C) entsteht in sehr kurzer Zeit der in Stufe C von Fig. 2 dargestellte Zustand, d. h. die geätzten Bereiche 251 zwischen den ungeätzten Leitschichtbereichen 210 auf der Trägerplatte 20. Die geätzten Bereiche 251 bestehen meist zum weitaus überwiegenden Teil aus den unverbrauchten Anteilen der aufgedruckten Ätzmittelmasse und aus den Produkten der Reaktion von Ätzmittel und Leitschichtmaterial, z. B. Indium- und Zinnphosphat plus Wasser bei Verwendung der für viele Zwecke erfindungsgemäß bevorzugten Phosphorsäure. Das Produkt der letzten Stufe des erfindungsgemäßen Verfahrens (D, Fig. 2) entspricht demjenigen des bekannten Verfahrens, kann aber durch einfaches Abwaschen der geätzten Bereiche 251, etwa durch Eintauchen in ein geeignetes Lösungsmittel, des Produktes von Stufe C, Fig. 2, erhalten werden.

Verschiedene, aus der Erläuterung des Schemas von Fig. 2 ohne weiteres verständliche variable Faktoren des erfindungsgemäßen Verfahrens können vom Fachmann entsprechend dem jeweiligen gegebenen Anwendungszweck angepaßt werden:

Zunächst ist das Verfahren auch für andere Anwendungen als die bevorzugte Herstellung von Bereichselektroden von Flüssigkristallanzeigen geeignet, nämlich für alle Zwecke, die bereichsweise oder musterartig aufgetragene Filme aus leitfäigem und vorzugsweise transparentem Material auf einem Substrat erfordern; Beispiele hierfür sind Abdeckgläser hochempfindlicher Meßgeräte.

Weiterhin ist die Art des Substrates (20, Fig. 2) bzw. der Trägerplatte solange unkritisch, als das Substrat für das Bedrucken mit einer Ätzmasseschicht geeignet ist, d. h. mindestens eine praktisch ebene Oberfläche mit darauf aufgetragener Leitschicht besitzt. Silikatglas ist ein typisches Beispiel; auch Quarzgläser oder organische Gläser kommen für das Substrat in Betracht. Der mit der Leitschicht versehene Teil des Substrates ist normalerweise ein elektrischer Isolator, doch können entfernte Teile des Substrates aus leitfähigem Material bestehen. Ein erfindungsgemäß als Trägerplatte geeignetes Substrat kann somit auch ein Mehrkomponenten- bzw. Verbundgebilde sein.

Das für die Leitschicht (21, Fig. 2) verwendete Material bzw. dessen Dicke und sonstige Eigenschaften sind nur in bezug auf die Endverwendung des Produktes des erfindungsgemäßen Verfahrens, nicht aber das Verfahren selbst, wesentlich. Anstelle der für solche Leitschichten üblichen halbleitenden Oxide von Metallen, wie Indium oder/und Zinn, kommen auch Oxide von Zink, die mit Antimonoxid dotiert sind, sowie Cadmium in Frage. Das bevorzugte Leitschichtmaterial auf Basis von Indiumoxid ist unter der Handelsbezeichnung ITO technisch erhältlich. Aber auch entsprechend dünne Metallschichten können optisch transparent bzw. transluzent sein — d. h. eine ausreichende optische Transmission haben — und lassen sich erfindungsgemäß ätzen.

Besondere Vorbehandlungen des mit Leitschicht versehenen Substrates sind für das erfindungsgemäße Verfahren nicht erforderlich bzw. — wie z. B. eine Temperung — meist unzweckmäßig, wenn sie die Ätzbarkeit der Leitschicht verändern bzw. verschlechtern.

Als Druckverfahren zum bereichsweisen Auftragen der Ätzmasseschicht (25, Fig. 2) wird der übliche Siebdruck (Serigraphie) bevorzugt, weil mit diesem Druckverfahren auch sehr feine Muster, z. B. mit Strichbreiten von nur 0,1 mm, definiert aufgedruckt und erfindungsgemäß ausgeätzt werden können. Geeignete Siebdruckmaschinen sind im Handel erhältlich und die üblichen, entsprechend feinmaschigen Drucksiebe sind normalerweise gegen die erfindungsgemäß bevorzugten Ätzmittel beständig bzw. können ohne Schwierigkeiten gegen entsprechend beständige Siebe, z. B. aus säurebeständigen natürlichen oder synthetischen Filamenten, wie Seide, Nylon, Polyester usw., ausgetauscht werden.

Die Maske des Drucksiebes kann in an sich üblicher Weise photolithographisch erzeugt werden und soll natürlich wie das Drucksieb selbst gegen das Ätzmittel der als Druckfarbe dienenden Masse beständig sein. Anstatt durch den hier meist bevorzugten Siebdruck kann die Ätzmittelmasse aber auch durch Offset, Tampondruck und dergleichen Methoden aufgetragen werden, solange damit die für den jeweiligen Verwendungszweck des fertigen Produktes nötige Definition des Ätzmusters erzielbar ist.

Die erfindungsgemäß für das Aufdrucken verwendete Masse enthält das Ätzmittel, meist eine Mineralsäure, gegebenenfalls in mit Wasser oder anderem Lösungsmittel für die Säure verdünnter Form. Phosphorsäure wird wegen der guten Ätzwirkung und der vorteilhaften anwendungstechnischen Eigenschaften dieser Säure bevorzugt, doch können auch andere normalerweise flüssige oder aber wasserlösliche Säuren, wie Halogenwasserstoffsäuren, z. B. wäßrige HCl, Halogensauerstoffsäuren, Salpetersäure, Schwefelsäure oder starke organische Säuren, verwendet werden, die mit dem Leitschichtmaterial zur Bildung von Salzen befähigt sind.

Im allgemeinen enthält die Masse wie oben angedeutet außer dem Ätzmittel einen inerten Träger. Die als »Bindemittel« bzw. Vehikel bekannten oleophilen Komponenten von Druckfarben sind für viele Zwecke der Erfindung geeignet, z. B. das für Siebdruckmassen technisch erhältliche Material auf Zedernölbasis. Organische oder anorganische Öle, gegebenenfalls mit Verdickungsmitteln, sind als Beispiel einer geeigneten Stoffklasse für den inerten Träger zu nennen. Die Konsistenz der Ätzmasse kann flüssig bis pastös sein, je nach Art des Druckverfahrens.

Im allgemeinen enthält die Druckmasse 1 bis 50 Gew.-%, vorzugsweise 3 bis 40 Gew.-%, Ätzmittel und inerten Träger als restlichen Anteil. Übliche Zusatzstoffe für Druckmassen können verwendet werden, bringen aber meist keine besonderen Vorteile.

Hingegen kann es zweckmäßig sein, wenn sich die Viskosität der Masse kontrolliert verändern läßt, z. B. zur thermisch gesteuerten Viskositätserhöhung. Beispielsweise kann die Ätzmasse im Verlauf des Ätzens polymerisiert werden, um die Wirkung des Ätzmittels durch eine zunehmende Matrixwirkung des Trägers im Verlauf des Ätzens zu vermindern oder auszuschalten.

Die Entfernung der Ätzschicht (251, Fig. 2) nach dem je nach Temperatur meist innerhalb von 1 bis 120 sec vollständigen Durchätzen der zu entfernenden Bereiche (211, Fig. 2) der Leitschicht kann durch einfaches Abwaschen, z. B. bei oleophilen Trägern mit organischen lipophilen technischen Lösungsmitteln, wie Trichloräthylen, Benzin, erfolgen. Die Verwendung von Wasser bzw. von mit Wasser mischbaren Lösungsmitteln und dementsprechend die Verwendung hydrophiler Träger der aufgedruckten Masse wird weniger bevorzugt, weil dies eine unkontrollierte bzw. unbeabsichtigte Ätzung der Leitschichtbereiche (210, Fig. 2) des herzustellenden Musters begünstigen kann.

Die nach dem erfindungsgemäßen Verfahren erhaltenen Substrate mit elektrisch leitfähigem Filmmuster können in gleiche Weise nachbehandelt bzw. verwendet werden, wie die analogen Produkte des Photoresist-Ätzverfahrens, z. B. durch Tempern bzw. Einbrennen, und Einbau in Flüssigkristallanzeigen, wie sie für Uhren, Meßgeräte und zahlreiche andere Zwecke verwendet werden.

### Beispiel

50 Gewichtsteile ätherisches Öl (Handelsprodukt; Binder für Siebdruck; auf Basis von Zedernölfraktionen) wurden mit 10 Gewichtsteilen konzentrierter Phosphorsäure ($H_3PO_4$) in einem Labormischer durchmischt, bis eine praktisch homogen erscheinende Masse mit honiggähnlicher Konsistenz entstanden war.

Diese Masse wurde mit einer üblichen Siebdruckanlage auf die aus $In_2O_3/SnO_2$ bestehende Leitschicht (Dicke 25 nm ± 1,25 nm) handelsüblicher Trägerplättchen aus Silikatglas aufgedruckt. Die Dicke der aufgedruckten Masseschicht betrug 20 µm ± 5 µm. Nach 5 sec Ätzdauer bei 60°C wurde die aufgedruckte Masse mit überschüssigem Amylacetat abgespült und das nunmehr mit Leitschichtmuster versehene Substrat an der Luft trocknen gelassen. Die Leitschicht erwies sich entsprechend der Konfiguration des Drucksiebes mit hoher Auflösung (definierte Strichbreiten von 0,1 mm) strukturiert.

Bezugszeichenliste:

10 Trägerschicht
11 Leitschicht
110 Leitschichtbereich des Musters
111 Ätzbereich der Leitschicht

12 Photolackschicht
120 belichteter Bereich von 12
121 unbelichteter Bereich von 12

130 Ätzmaske

20 Trägerschicht
21 Leitschicht
210 Leitschichtbereich des Musters
211 Ätzbereich der Leitschicht
25 Ätzpastendruckschicht
251 Ätzpastenschicht mit zersetztem Leitschichtmaterial

**Patentansprüche**

1. Verfahren zur Herstellung eines optisch transparenten und elektrisch leitfähigen Filmmusters auf einer Trägerplatte (20), insbesondere für die Herstellung von bereichsweise mit transparenten Elektrodenschichten versehenen Platten elektrooptischer Anzeigen, wobei eine auf die Trägerplatte (20) aufgebrachte, optisch transparente Schicht (21) aus elektrisch leitfähigem Material in vorbestimmten Bereichen (211) durch eine Ätzbehandlung mit einem Ätzmittel entfernt wird, dadurch gekennzeichnet, daß

— eine das Ätzmittel und einen Öl enthaltenden und gegenüber der Schicht (21) inerten Träger umfassende Ätzmasse (25) hergestellt wird,
— die durch Ätzen zu entfernenden Bereiche (211) der optisch transparenten Schicht (21) auf der Trägerplatte (20) mit der Ätzmasse (25) bedruckt werden,
— die Ätzmasse (25) auf die bedruckten Bereiche (211) bis zu ihrer Durchätzung einwirkt, und dann
— die von dem Ätzmittel durch Reaktion mit der transparenten Schicht (21) gebildeten Produkte zusammen mit den nicht verbrauchten Anteilen der aufgedruckten Ätzmasse (25) durch ein organisches Lösungsmittel von der Trägerplatte (20) entfernt werden.

2. Verfahren nach Patentanspruch 1, dadurch gekennzeichnet, daß die Ätzmasse (25) durch Siebdruck auf die optisch transparente Schicht (21) aufgebracht wird.

3. Verfahren nach Patentanspruch 1 oder 2, dadurch gekennzeichnet, daß das Ätzmittel eine zur Bildung löslicher Produkte des leitfähigen Materials befähigte Säure enthält.

4. Verfahren nach Patentanspruch 2 und 3, dadurch gekennzeichnet, daß das im Träger enthaltene Öl ein viskoses, ätherisches Öl ist.

5. Verfahren nach einem der Patentansprüche 1—4, dadurch gekennzeichnet, daß das elektrisch leitfähige Material (21) aus mindestens einem halbleitenden Metalloxid, z. B. Indium(3)-oxid und/oder Zinn(4)-oxid besteht.

6. Verfahren nach einem der Patentansprüche 3—5, dadurch gekennzeichnet, daß die Säure eine mit dem Träger kompatible Mineralsäure, vorzugsweise Phosphorsäure, ist.

7. Verfahren nach einem der Patentansprüche 1—6, dadurch gekennzeichnet, daß die Ätzmasse (25) bei Temperaturen zwischen Umgebungstemperatur und 100°C, vorzugsweise zwischen 30 und 90°C, insbesondere bei etwa 60°C, auf die bedruckten Bereiche (211) einwirkt.

8. Verfahren nach einem der Patentansprüche 2—7, dadurch gekennzeichnet, daß das Ätzmittel eine bei Raumtemperatur flüssige und wasserlösliche Säure oder eine wäßrige Lösung einer Säure ist.

**Claims**

1. Process for preparing an optically transparent and electrically conductive film pattern on a carrier plate (20), in particular for the preparation of electro-optical display plates provided zonally with transparent electrode layers, wherein an optically transparent layer (21) which has been applied to the carrier late (20) and consists of an electrically conductive material, is removed in predetermined zones (211) by an etching treatment with an etch, characterisd in that

— an etching composition (25) comprising the etch and oil-containing carrier which is inert towards the layer (21), is prepared,
— those zones (211) of the optically transparent layer (21) on the carrier plate (20) which are to be removed by etching are printing with the etching composition (25),

— the etching composition (25) acts on the printed zones (211) until these are etched through, and then

— the products formed from the etch by reaction with the transparent layer (21) are, together with the unconsumed portions of the etching composition (25) which has been printed on, removed from the carrier plate (20) by means of an organic solvent.

2. Process according to Patent Claim 1, characterised in that the etching composition (25) is applied by screenprinting to the optically transparent layer (21).

3. Process according to Patent Claim 1 or 2, characterised in that the etch contains an acid which is capable of forming soluble products of the conductive material.

4. Process according to Patent Claim 2 and 3, characterisd in that the oil contained in the carrier is a viscous essential oil.

5. Process according to one of Patent Claims 1 to 4, characterised in that the electrically conductive material (21) consists of at least one semi-conducting metal oxide, for example indium(3) oxide and/or tin(4) oxide.

6. Process according to one of Patent Claim 3 to 5, characterised in that the acid is a mineral acid which is compatible with the carrier, preferably phosphoric acid.

7. Process according to one of Patent Claims 1 to 6, characterisd in that the etching composition (25) acts on the printed zones (211) at temperatures between ambient temperature and 100°C, preferably between 30 and 90°C, in particular at about 60°C.

8. Process according to one of Patent Claims 2 to 7, characterised in that the etch is a water-soluble acid, which is liquid at room temperature, or an aqueous solution of an acid.

**Revendications**

1. Procédé pour confectionner un échantillon de film optiquement transparent et conducteur de l'électricité sur une plaque de support (20), en particulier pour confectionner des plaques de dispositifs d'affichage électro-optiques pourvues de place en place de couches électrodes transparentes, une couche optiquement transparente (21) appliquée sur la plaque de support (20) et faite d'une matière conductrice électrique étant éliminée, dans des zones pré-établies (211), par un traitement de morsure à l'aide d'un agent de morsure, caractérisé en ce que

— on prépare une matière de morsure (25) contenant l'agent de morsure et une huile et comportant un support inerte à l'égard de la couche (21),

— on imprime sur la plaque de support (20) à l'aide de la matière de morsure (25), les zones (211) de la couche optiquement transparente (21) qu'il faut éliminer par morsure,

— la matière de morsure (25) agit sur les zones imprimées (211) jusqu'à rongement complet, puis

— on élimine de la plaque de support (20) les produits formés par l'agent de morsure par réaction avec la couche transparente (21) ainsi que les fractions non utilisées de la matière de morsure imprimée (25) au moyen d'un agent dissolvant organique.

2. Procédé suivant la revendication 1, caractérisé en ce qu'on applique la matière de morsure (25) par sérigraphie sur la couche optiquement transparente (21).

3. Procédé suivant la revendication 1 ou 2, caractérisé en ce que l'agent de morsure contient un acide apte à former des produits solubles de la matière conductrice.

4. Procédé suivant les revendications 2 et 3, caractérisé en ce que l'huile dans le support est une huile essentielle visqueuse.

5. Procédé suivant l'une quelconque des revendications 1 à 4, caractérisé en ce que la matière conductrice électrique (21) est constituée au moins d'un oxyde métallique semi-conducteur, comme de l'oxyde d'indium-(3) et/ou de l'oxyde d'étain-(4).

6. Procédé suivant l'une quelconque des revendications 3 à 5, caractérisé en ce que l'acide est un acide minéral compatible avec le support, de préférence de l'acide phosphorique.

7. Procédé suivant l'une quelconque des revendications 1 à 6, caractérisé en ce que la matière de morsure (25) agit sur les zones imprimées (211) à des températures comprises entre la température ambiante et 100°C, de préférence entre 30 et 90°C, ou mieux encore d'environ 60°C.

8. Procédé suivant l'une quelconque des revendications 2 à 7, caractérisé en ce que l'agent de morsure est un acide liquide et hydrosoluble à température ambiante ou une solution aqueuse d'un acide.

Fig. 1

Fig. 2

0 022 279